# FASCICULE DE BREVET EUROPEEN

(11) **EP 0 876 720 B1**
(45) Date de publication et mention de la délivrance du brevet: **17.04.2002**
(21) Numéro de dépôt: 97901674.8
(22) Date de dépôt: 24.01.1997
(51) Int. Cl.: H04L 5/14

(54) **TERMINAUX EMETTEURS/RECEPTEURS UTILISANT UN SIGNAL HERTZIEN BIDIRECTIONNEL A FREQUENCE PORTEUSE UNIQUE POUR LES DEUX DIRECTIONS**
BIDIREKTIONALES FUNKSIGNAL GEBRAUCHENDE SENDEREMPFÄNGER-ENDGERÄTE MIT EINER EINZIGEN TRÄGERFREQUENZ FÜR BEIDE RICHTUNGEN
TRANSCEIVER TERMINALS USING A TWO-WAY RF SIGNAL WITH A SINGLE CARRIER FREQUENCY FOR BOTH DIRECTIONS

(30) Priorité: 25.01.1996 FR 9601107
(43) Date de publication de la demande: 11.11.1998
(73) Titulaire: FRANCE TELECOM, 75015 Paris (FR); TELEDIFFUSION DE FRANCE, 75932 Paris Cédex 15 (FR)
(72) Inventeur: PACE, Daniel, F-35700 Rennes (FR); VEILLARD, Jacques, F-35760 Montgermont (FR)
(74) Mandataire: Vidon, Patrice
(86) Numéro de dépôt international: FR9700150
(87) Numéro de publication internationale: WO9727687

(56) Documents cités:
- WO-A-94/10761
- US-A- 4 710 944
- US-A- 4 829 588

## Description

Le domaine de l'invention est celui de la transmission hertzienne de signaux. Plus précisément, l'invention concerne les systèmes prévoyant des échanges de signaux bidirectionnels entre deux terminaux émetteurs/récepteurs, ou entre une station de diffusion et au moins un terminal d'usager.

Par simplification, on appelle par la suite terminal tout dispositif émetteur/récepteur (même dans le cas où il s'agit d'une station de diffusion).

Un domaine particulier de l'invention est celui de la diffusion de signaux de télévision numériques, dans les systèmes prévoyant une voie de retour des récepteurs de télévision vers l'émetteur du signal de télévision. Les voies de retour sont connues depuis longtemps, notamment dans le cadre des réseaux de télévision câblés. Elles peuvent être utilisées en particulier pour transmettre des données permettant une interactivité entre l'utilisateur du récepteur et le programme émis (participation à des jeux ou des sondages par exemple).

Plus généralement, l'invention est applicable dans tous les cas où une communication hertzienne est mise en oeuvre de façon bidirectionnelle, que celle-ci soit une transmission multipoint à point ou point à point, qu'elle soit ou non symétrique.

Les techniques de voies de retour ont été développées à l'origine pour les réseaux câblés. Dans ces techniques, la voie de retour est classiquement émise sur le câble de distribution du signal de télévision à une fréquence différente de celle utilisée par ce signal de télévision. Une autre solution consiste à utiliser un réseau indépendant, et par exemple le réseau téléphonique.

Dans le domaine hertzien, la technique de la voie de retour n'a pas encore été mise en oeuvre. Les solutions prévues s'inspirent de la technique câblée et/ou des techniques de communication bidirectionnelles connues, utilisées par exemple en radio-communication.

Dans tous les cas, des bandes de fréquences distinctes doivent être allouées à chaque direction de communication. Cela se traduit par un encombrement important du spectre de fréquence. Il s'agit d'un problème crucial, le besoin en ressource de transmission étant toujours croissant.

L'invention a notamment pour objectif de pallier cet inconvénient de l'état de la technique.

Plus précisément, l'invention a pour objectif de fournir des terminaux émetteurs/récepteurs basés sur une structure de signal bidirectionnel présentant un encombrement du spectre des fréquences réduit, par rapport aux techniques connues.

En particulier, l'invention a pour objectif de fournir de tels terminaux qui permettent la mise en oeuvre d'une voie de retour, sans nécessiter l'allocation d'une ressource spécifique à cette voie de retour.

Un autre objectif de l'invention est de fournir de tels terminaux émetteurs/récepteurs qui soient simplifiés, du point de vue matériel, et donc de coût réduit.

Un objectif particulier de l'invention est de fournir des terminaux qui soient peu sensibles aux dérives de fréquences, notamment lorsque l'on utilise de très hautes fréquences (par exemple 40 GHz), sans nécessiter de moyens coûteux. On rappelle qu'en effet, à 40 GHz, les variations de fréquences des oscillateurs classiques peuvent atteindre plusieurs MHz, lorsque leur température varie, par exemple en fonction de la température extérieure.

Ces objectifs, ainsi que d'autres qui apparaîtront par la suite, sont atteints selon l'invention à l'aide de terminaux mettant en oeuvre un signal hertzien bidirectionnel comprenant une voie descendante et une voie remontante, ladite voie descendante comprenant une fréquence pilote correspondant à la fréquence porteuse de modulation de la voie remontante.

Cette structure nouvelle de signal bidirectionnel va clairement à l'encontre de l'état de l'art et des a priori de l'homme du métier, qui a toujours considéré que deux voies symétriques entre deux terminaux devaient être émises sur des bandes de fréquences distinctes, pour éviter toute perturbation (voir par exemple toutes les techniques de radiotéléphonie connues).

Les inventeurs ont pu vérifier que, malgré tout, il était possible, en respectant certaines conditions, d'utiliser la même fréquence porteuse dans les deux sens de transmission.

La fréquence pilote peut alors être utilisée, à la réception, d'une part pour démoduler le signal reçu, et d'autre part pour moduler le signal à émettre. Dans le cas d'une transmission point-multipoint, c'est la station de diffusion qui délivre la fréquence pilote de réception. Les terminaux récepteurs correspondants sont ainsi simplifiés.

De façon préférentielle, au moins une desdites voies (essentiellement, la voie descendante) comprend successivement, suivant l'axe des fréquence, ladite fréquence pilote, une bande de fréquence vierge et une bande de fréquence portant au moins un signal utile.

La bande de fréquence vierge permet d'éviter les perturbations de la fréquence pilote sur le signal utile, et réciproquement.

Avantageusement, ladite fréquence porteuse de modulation est située dans la gamme des ondes centimétriques ou millimétriques. Ceci permet de réaliser des terminaux équipés d'une antenne de réception et d'une antenne d'émission aisément découplées (dès qu'une distance suffisante les sépare, soit de quelques centimètres à plusieurs décimètres suivant la fréquence précisément utilisée).

Selon un mode de réalisation particulier de l'invention, ladite voie descendante porte un signal de télévision diffusé par une station de diffusion vers une pluralité de récepteurs, et en ce que ladite voie remontante est une voie de retour desdits récepteurs vers ladite station de diffusion.

Notamment, l'invention peut être mise en oeuvre dans des systèmes MMDS (Microwave Multichannel Multipoint Distribution System (système de distribution multipoint multicanal micro-onde)) actuellement en cours de conception.

De façon avantageuse, ladite voie descendante et/ou ladite voie remontante comprend au moins deux canaux indépendants. Il peut par exemple s'agir des canaux prévus dans un système MMDS cité ci-dessus.

L'invention concerne également tout terminal d'émission/réception d'un signal hertzien bidirectionnel tel que décrit ci-dessus.

Avantageusement, un tel terminal comprend des moyens uniques de génération de ladite fréquence porteuse, alimentant simultanément des moyens de modulation d'une voie descendante (respectivement remontante), et des moyens de démodulation d'une voie remontante (respectivement descendante).

Les terminaux d'usager correspondant mettent en oeuvre un oscillateur synchronisé sur ladite fréquence pilote de la voie descendante, pour assurer d'une part la transposition en fréquence intermédiaire des signaux de ladite voie descendante, et d'autre part la transposition autour de ladite fréquence pilote des signaux de ladite voie remontante.

Les terminaux de station de diffusion mettent en oeuvre un oscillateur hyperfréquence de haute stabilité pour, d'un part, générer ladite fréquence pilote et, d'autre part, assurer la transposition en fréquence intermédiaire des signaux de ladite voie remontante.

De façon avantageuse, ces deux types de terminaux comprennent deux antennes distinctes, pour l'émission et la réception respectivement, placées de façon qu'elles présentent des directions de rayonnement sensiblement parallèles et qu'elles soient séparées par une distance d'au moins deux longueurs d'ondes.

D'autres caractéristiques et avantages de l'invention apparaîtront plus clairement à la lecture de la description suivante d'un mode de réalisation préférentiel de celle-ci, donnée à titre de simple exemple illustratif et non limitatif, et des dessins annexés parmi lesquels :
- la figure 1 illustre un exemple d'allocation de spectre de fréquence pour un signal selon l'invention, plus précisément destiné à un système de diffusion d'un signal de télévision numérique avec voie de retour ;
- la figure 2 est un schéma synoptique des moyens de modulation et de démodulation intégrés dans le terminal d'un utilisateur, prévus pour le signal de la figure 1 ;
- la figure 3 présente un synoptique d'une station de diffusion prévue pour coopérer avec un ou plusieurs terminaux intégrant les moyens de modulation et de démodulation de la figure 2.

Le mode de réalisation décrit ci-dessous s'applique particulièrement à un système prévoyant une voie de retour. Il est notamment compatible avec le système MMDS. Toutefois, il apparaîtra clairement à l'homme du métier qu'il peut être adapté aisément à de nombreuses autres applications.

Ce système s'applique à la mise en oeuvre d'une voie de retour dans le cadre des réalisations de systèmes MMDS. Ces systèmes peuvent notamment être utilisés en tant qu'extension de réseaux câblés (de type HFC par exemple) dans les zones difficiles d'accès ou à faible densité de population. La structure décrite présente donc de nombreux points communs avec les signaux HFC, mais ceux-ci ne sont bien sûr nullement obligatoires.

Ce système utilise préférentiellement une bande de fréquence située dans la gammes des ondes millimétriques ou centimétriques, par exemple entre 40,5 GHz et 42,5 GHz. Comme cela apparaîtra par la suite, cela permet d'utiliser deux antennes sur les terminaux d'utilisateurs.

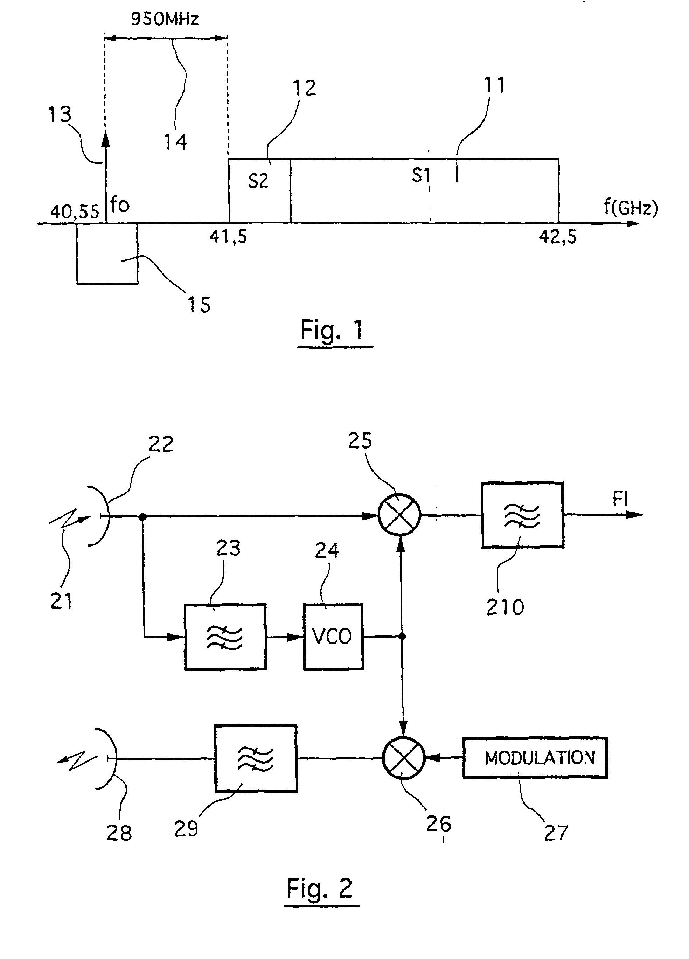

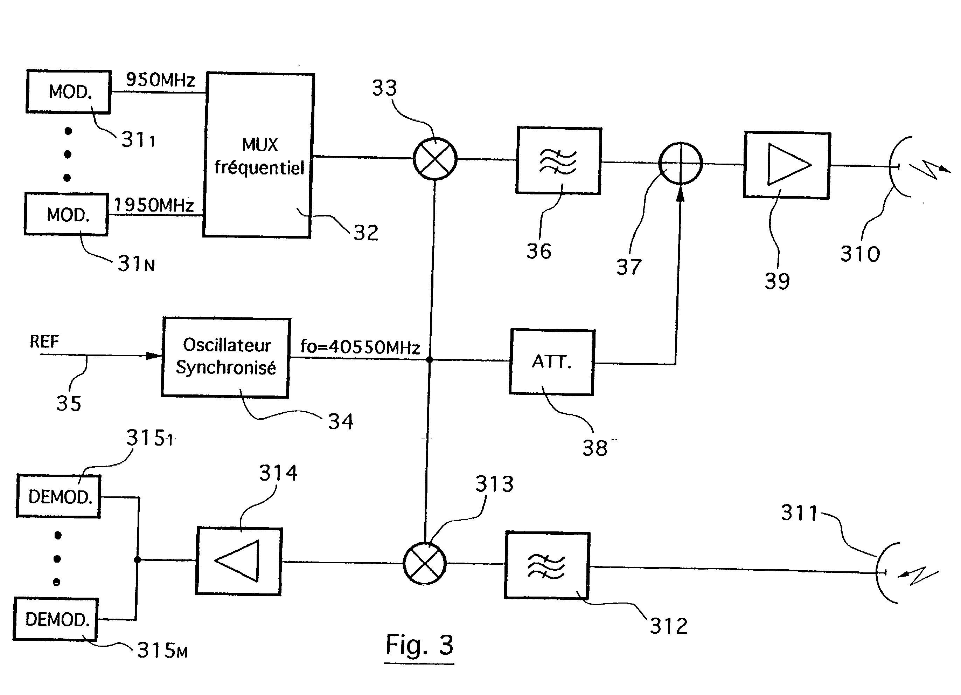

Le système comprend une station de diffusion (figure 3), qui délivre une voie descendante vers une pluralité de terminaux d'utilisateurs (figure 2). Ceux-ci peuvent émettre une voie remontante (voie de retour) vers la station de diffusion.

Les structures des signaux correspondants sont illustrées en figure 1, dans le cas de flux d'information descendant et montant (remontant) dissymétriques.

La voie descendante comprend :
- N canaux (11) portant l'information S1. Ces canaux sont par exemple modulés selon une modulation MDP4. Le multiplex S1 peut occuper une largeur de bande de 1 GHz, par exemple entre 41,5 et 42,5 GHz ;
- P canaux (12) portant les informations S2. Avantageusement, la modulation utilisée est, de façon identique, une modulation MDP4. Ces canaux sont multiplexés en fréquence dans une bande fréquence adjacente à la bande allouée aux canaux S1 ;
- une fréquence pilote 13, destinée à synchroniser les oscillateurs des terminaux d'utilisateur, tel que décrit ci-dessous en relation avec la figure 2.

Une bande de fréquence vierge 14 est ménagée entre la fréquence pilote 13 et le premier canal. Elle peut avoir une largeur de 950 MHz, la fréquence pilote 13 valant alors 40 550 MHz.

La voie remontante comprend une bande de fréquence 15 composée de P canaux portant les information,s symétriques des informations S2 de la voie descendante. Cette bande de fréquence est centrée sur la fréquence pilote 13.

Dans le cas de flux d'information symétriques, le flux S1 serait inexistant.

La figure 2 présente un synoptique des moyens de traitement du signal dans un terminal d'utilisateur.

La voie descendante 21 est reçue sur une antenne de réception 22. Un filtre 23 extrait du signal reçu la fréquence pilote 13, qui synchronise un oscillateur micro-onde contrôlé en tension 24, à l'aide d'une boucle à verrouillage de phase.

Cet oscillateur 24 a, selon l'invention, deux fonctions. II délivre la fréquence f₀ = 40 550 MHz pour :
- transposer (25) les canaux S1 et S2 de la voie descendante vers une première fréquence intermédiaire comprise, dans l'exemple illustré, entre 950 MHz et 1 950 MHz. Il est alors possible, après filtrage 210, d'utiliser pour les canaux S1 des décodeurs connus adaptés à cette bande de fréquence intermédiaire, tels que les décodeurs de démodulation de télévision numérique par satellite IRD (Integrated Receiver Décoder) ;
- transposer (26) la porteuse modulée de la voie remontante dans la bande millimétrique. Le modulateur 27 peut délivrer un signal dans la bande comprise entre 5 et 55 MHz.

II est également envisageable d'insérer dans la voie remontante une fréquence pilote, associée à chaque modulateur MDP4, afin de permettre la réalisation d'une démodulation cohérente dans la station de diffusion.

Après transposition 26, on obtient un signal modulé double bande centré sur la fréquence f₀, qui est filtré (29) puis émis par l'antenne d'émission 28.

Les antennes 22 et 28 sont placées de façon que :
- elles soient distantes l'une de l'autre d'au moins quelques longueurs d'onde ;
- elles présentent des directions de propagation différentes (opposées).

Ces antennes doivent en outre avoir une directivité suffisante.

Cela permet de découpler les deux antennes. Plus précisément, il faut que l'atténuation du signal entre les antennes 22 et 28 soit suffisante pour éviter les problèmes d'interférences. Pour augmenter cette atténuation, il est avantageux que la voie remontante mette en oeuvre une polarisation croisée par rapport à celle de la voie descendante.

La figure 3 est un schéma synoptique d'une station de diffusion prévue pour échanger des données avec une pluralité de stations d'usager telles que présentés ci-dessus.

La station de diffusion reçoit une pluralité de signaux source 31₁ à 31_{N}, modulés sur des fréquences comprises entre 950 MHz et 1 950 MHz. Ces signaux source sont multiplexés en fréquence (32). Le multiplex obtenu est transposé en radio-fréquence par multiplication 33 avec la fréquence f₀ = 40 550 MHz.

Cette fréquence f₀ est délivrée par un oscillateur hyperfréquence synchronisé 34, qui tient compte d'une référence 35 à haute stabilité.

Le signal transposé est filtré par un filtre passe-bande 36, laissant passer la bande comprise entre 41,5 et 42,5 MHz. Ensuite, on ajoute (37) au signal filtré le pilote f₀ = 40 550 MHz, préalablement atténué (38). Enfin, le signal complet est amplifié (39), puis émis vers les usagers par une antenne d'émission 310.

Parallèlement, une antenne de réception 311 reçoit les voies de retour émises par les différents terminaux d'usager. Le signal reçu subit un filtrage passe-bande 312, centré sur 40 550 MHz, puis est transposé en fréquence intermédiaire, par multiplication 313 avec la fréquence f₀ déjà utilisée pour moduler la voie descendante.

Enfin, le signal est amplifié (314), puis chaque canal le constituant est démodulé, selon une démodulation appropriée à la modulation utilisée 315₁ à 315_{M}.

On constate donc que la technique de l'invention permet notamment :
- une économie en fréquence, la même bande étant utilisable pour la voie remontante et pour la voie descendante ; et
- une simplification des terminaux (station de diffusion et, surtout, terminaux d'usager), une seule fréquence pilote étant nécessaire. Les terminaux d'usager sont d'autant plus simplifié qu'ils extraient le pilote du signal reçu.

## Revendications

1. Terminal d'usager d'un signal hertzien bidirectionnel comprenant une voie descendante et une voie remontante,
**caractérisé en ce que** ladite voie descendante comprend une fréquence pilote correspondant à la fréquence porteuse de modulation de la voie remontante, ledit terminal mettant en oeuvre un oscillateur (24) synchronisé sur ladite fréquence pilote de la voie descendante, pour assurer d'une part la transposition (25) en fréquence intermédiaire des signaux de ladite voie descendante, et d'autre part la transposition (26) autour de ladite fréquence pilote des signaux de ladite voie remontante.

2. Terminal de station de diffusion générant la voie descendante d'un signal hertzien bidirectionnel comprenant une voie descendante et une voie remontante, **caractérisé en ce que** ladite voie descendante comprend une fréquence pilote correspondant à la fréquence porteuse de modulation de la voie remontante, ledit terminal mettant en oeuvre un oscillateur hyperfréquence (34) de haute stabilité pour:
- générer ladite fréquence pilote ;
- assurer la transposition (313) en fréquence intermédiaire des signaux de ladite voie remontante ;
- assurer la transposition (33) en fréquence intermédiaire des signaux de ladite voie descendante.

3. Terminal selon l'une quelconque des revendications 1 et 2,
**caractérisé en ce qu'**il comprend deux antennes distinctes (28, 22 ; 310, 311), pour l'émission et la réception respectivement, placées de façon qu'elles présentent des directions de rayonnement sensiblement parallèles et qu'elles soient séparées par une distance d'au moins deux longueurs d'ondes.

4. Terminal selon l'une quelconque des revendications 1 à 3,
**caractérisé en ce que** ladite voie descendante comprend successivement, suivant l'axe des fréquence, ladite fréquence pilote (13), une bande de fréquence vierge (14) et une bande de fréquence (11, 12) portant au moins un signal utile.

5. Terminal selon l'une quelconque des revendications 1 à 4,
**caractérisé en ce que** ladite fréquence pilote (13) appartient à la gamme des ondes centimétriques ou millimétriques.

6. Terminal selon l'une quelconque des revendications 1 à 5,
**caractérisé en ce que** ladite voie descendante porte un multiplex (11) de signaux de télévision numériques et/ou analogiques diffusé par une station de diffusion vers une pluralité de terminaux d'usager, et **en ce que** ladite voie remontante est une voie de retour (15) desdits terminaux d'usager vers ladite station de diffusion.

## Patentansprüche

1. Benutzerterminal für ein bidirektionales Funksignal, das einen Abwärtskanal und einen Aufwärtskanal umfasst,
**dadurch gekennzeichnet, dass** der Abwärtskanal eine Pilotfrequenz umfasst, die der modulierenden Trägerfrequenz des Aufwärtskanals entspricht, wobei das Terminal einen synchronisierten Oszillator (24) über die Pilotfrequenz des Abwärtskanals betreibt, um einerseits die Umsetzung (25) der Signale des Abwärtskanals auf die Zwischenfrequenz und andererseits die Umsetzung (26) der Signale des Aufwärtskanals um die Pilotfrequenz herum sicherzustellen.

2. Terminal einer Sendestation, welches einen Abwärtskanal eines bidirektionalen Funksignals erzeugt, das einen Abwärtskanal und einen Aufwärtskanal umfasst,
**dadurch gekennzeichnet, dass** der Aufwärtskanal eine Pilotfrequenz umfasst, die der modulierenden Trägerfrequenz des Aufwärtskanals entspricht, wobei das Terminal einen hochstabilen Ultrahochfrequenz-Oszillator (34) zu den folgenden Zwecken einsetzt:
- Erzeugen der Pilotfrequenz;
- Sicherstellen der Umsetzung (313) der Signale des Aufwärtskanals zu Zwischenfrequenzen hin;
- Sicherstellen der Umsetzung (33) der Signale des Abwärtskanals zu Zwischenfrequenzen hin.

3. Terminal nach einem der Ansprüche 1 und 2,
**dadurch gekennzeichnet, dass** es zwei verschiedene Sende- bzw. Empfangsantennen (28, 22; 310, 311) umfasst, welche derart angebracht sind, dass ihre Abstrahlungsrichtungen in etwa parallel verlaufen und der Abstand zwischen ihnen mindestens zwei Wellenlängen beträgt.

4. Terminal nach einem der Ansprüche 1 bis 3,
**dadurch gekennzeichnet, dass** der Abwärtskanal entlang der Frequenzachse nacheinander die Pilotfrequenz (13), ein unbenutztes Frequenzband (14) und ein Frequenzband (11, 12), das mindestens ein Nutzsignal trägt, umfasst.

5. Terminal nach einem der Ansprüche 1 bis 4,
**dadurch gekennzeichnet, dass** die Pilotfrequenz (13) zu der Gruppe der Zentimeter- bzw. der Millimeterwellen gehört.

6. Terminal nach einem der Ansprüche 1 bis 5,
**dadurch gekennzeichnet, dass** der Abwärtskanal ein Multiplex (11) von digitalen und/oder analogen Fernsehsignalen trägt, die von einer Sendestation zu einer Mehrzahl von Benutzerterminals gesendet werden und,
dass es sich bei dem Aufwärtskanal um eine Rücklaufstrecke (15) von den Benutzerterminals zur Sendestation handelt.

## Claims

1. User terminal for a two-way RF signal comprising a descending channel and an ascending channel, **characterised in that** said descending channel comprises a pilot frequency corresponding to the carrier frequency to modulate the ascending channel, said terminal using an oscillator (24) synchronised to said pilot frequency of the descending channel, to ensure, on the one hand, the transposition (25) of the signals of said descending channel to intermediate frequency and, on the other hand, the transposition (26) of the signals of said ascending channel around said pilot frequency.

2. Broadcasting station terminal generating the descending channel of a two-way RF signal comprising a descending channel and an ascending channel, **characterised in that** said descending channel comprises a pilot frequency corresponding to the carrier frequency to modulate the ascending channel, said terminal using an ultrahigh frequency oscillator (34) with high stability for:
- generating said pilot frequency;
- ensuring the transposition (313) of the signals of said ascending channel to intermediate frequency;
- ensuring the transposition (33) of the signals of said descending channel to intermediate frequency.

3. Terminal according to any one of claims 1 and 2, **characterised in that** it comprises two distinct antennae (28, 22; 310, 311) for transmitting and receiving respectively, placed so as to have radiation directions which are substantially parallel and to be separated by a distance of at least two wavelengths.

4. Terminal according to any one of claims 1 to 3, **characterised in that** said descending channel comprises in succession, along the frequency axis, said pilot frequency (13), a clear frequency band (14) and a frequency band (11, 12) carrying at least one useful signal.

5. Terminal according to any one of claims 1 to 4, **characterised in that** said pilot frequency is in the centimetre or millimetre wave range.

6. Terminal according to any one of claims 1 to 5, **characterised in that** said descending channel carries a multiplex (11) of digital and/or analogue television signals broadcast by a broadcasting station to a plurality of user terminals, and **in that** said ascending channel is a return channel (15) of said user terminals to said broadcasting station.
